# FASCICULE DE BREVET EUROPEEN

(11) **EP 0 872 459 B1**
(45) Date de publication et mention de la délivrance du brevet: **04.10.2001**
(21) Numéro de dépôt: 98400864.9
(22) Date de dépôt: 09.04.1998
(51) Int. Cl.: C03C 25/22

(54) **Procédé et appareil de fabrication d'une fibre optique munie d'un revêtement hermétique**
Verfahren und Vorrichtung zur Herstellung einer optischen Faser mit einer hermetischen Beschichtung
Method and apparatus for the manufacture of an optical fibre with a hermetic coating

(30) Priorité: 14.04.1997 FR 9704542
(43) Date de publication de la demande: 21.10.1998
(73) Titulaire: ALCATEL, 75008 Paris (FR)
(72) Inventeur: Bourhis, Jean-François, 95150 Taverny (FR); Bloas, Jean-Pierre, 78700 Conflans Ste Honorine (FR); Mac Kenzie, Patrick, 75006 Paris (FR); Matau, Max, 92390 Villeneuve La Garenne (FR)
(74) Mandataire: Laroche, Danièle

(56) Documents cités:
- EP-A- 0 498 939
- EP-A- 0 571 915
- PATENT ABSTRACTS OF JAPAN vol. 095, no. 011, 26 décembre 1995 -& JP 07 206476 A (FURUKAWA ELECTRIC CO LTD:THE), 8 août 1995,
- PATENT ABSTRACTS OF JAPAN vol. 014, no. 390 (C-0751), 23 août 1990 -& JP 02 145462 A (SUMITOMO ELECTRIC IND LTD), 4 juin 1990,
- PATENT ABSTRACTS OF JAPAN vol. 014, no. 470 (C-0769), 15 octobre 1990 -& JP 02 192438 A (FURUKAWA ELECTRIC CO LTD:THE), 30 juillet 1990,

## Description

La présente invention concerne un procédé de fabrication de fibres optiques ayant un revêtement hermétique, ainsi qu'un appareil convenant à la mise en oeuvre d'un tel procédé.

On sait déjà utiliser des gaz organiques pour la formation de revêtements hermétiques sur des fibres optiques, par exemple formées de silice, à partir de compositions à base de carbone. Ainsi, la demande de brevet européen EP-A-308 143 décrit une fibre optique revêtue d'un revêtement hermétique de carbone lors de son passage dans un réacteur dans lequel la fibre est mise au contact d'un milieu gazeux réactif. Cet appareil comprend essentiellement un réacteur cylindrique placé verticalement, et la fibre descend dans ce réacteur. Un milieu gazeux réactif est introduit à la partie inférieure du réacteur et s'échappe à sa partie supérieure. Des sas sont formés aux extrémités du réacteur pour empêcher l'interaction entre l'atmosphère et le milieu gazeux réactif.

On s'est rendu compte que ces appareils présentaient rapidement un encrassement par dépôt de suies de carbone aux parties supérieure et surtout inférieure de l'appareil. La présence de suies dans le réacteur permet leur fixation sur la fibre et la détérioration des propriétés du revêtement hermétique déjà formé. En conséquence, la longueur maximale de fibre qui peut être obtenue avant que l'appareil ne doive subir un nettoyage est seulement de quelques kilomètres.

Etant donné que le coût des fibres optiques réalisées dépend directement de la longueur de fibre qui peut être fabriquée en une seule fois par traitement dans un tel appareil, on a essayé de réduire cet encrassement.

Le document EP-A-518 318 décrit un procédé et un appareil de fabrication d'une fibre optique ayant un revêtement hermétique selon lesquels l'encrassement du réacteur est évité par formation d'un film continu de liquide à la paroi interne du réacteur ; le liquide, en s'écoulant, entraîne les suies qui peuvent se former dans le réacteur. Il est indiqué que ce procédé et cet appareil permettent l'obtention de fibres continues de longueur supérieure à 100 km. Cependant, ce procédé est complexe et délicat à mettre en oeuvre, et la formation d'un film liquide continu le long des parois présente des difficultés. Le réacteur a une configuration qui s'évase vers le bas et comporte des dispositifs d'épuration du liquide utilisé et des gaz usés. Dans ce réacteur, le milieu gazeux réactif circule à vitesse constante dans le même sens que la fibre, puis la vitesse diminue au niveau d'un embout dont l'extrémité correspond à un élargissement du réacteur.

Le document EP-A-571 915 décrit un autre appareil de production d'une fibre optique ayant un revêtement hermétique et pouvant avoir une grande longueur grâce à la réduction de l'encrassement du réacteur. Selon ce document, la vitesse de déplacement du milieu réactif gazeux est réduite progressivement le long de la fibre, dans la partie dans laquelle est réalisé le dépôt chimique en phase vapeur. Ce document décrit notamment une comparaison effectuée entre un réacteur classique et un réacteur dont la section augmente progressivement, ce réacteur permettant la fabrication d'une fibre deux fois plus longue qu'avec le premier réacteur.

Le problème précité de l'encrassement du réacteur est dû au fait qu'une partie du milieu gazeux réactif se décompose en formant des suies qui se déposent sur la paroi du réacteur. Dans le document précité EP-A-518 318, le résultat est obtenu par entraînement mécanique des suies au fur et à mesure de leur formation, alors que, dans le document précité EP-A-571 915, le résultat est obtenu par réduction de la vitesse du courant de gaz de manière que les suies soient maintenues à distance des parois du réacteur, avec réduction de la vitesse de déplacement.

L'invention concerne une autre solution au problème de l'encrassement qui permet une augmentation considérable de la longueur de fibre qui peut être fabriquée dans un réacteur. Plus précisément, selon l'invention, à l'emplacement auquel la fibre a pratiquement terminé de recevoir le revêtement hermétique de carbone, le milieu gazeux réactif est accéléré avant d'être écarté de la fibre qui pénètre alors directement dans un gaz inerte. L'encrassement est réduit dans la partie de dépôt chimique en phase vapeur parce que le courant de gaz est accéléré, et les suies sont ensuite entraînées dans un espace annulaire séparé de la fibre et ne peuvent donc pas se déposer sur la fibre.

Ainsi, l'invention concerne un procédé de fabrication d'une fibre optique revêtue, du type qui comprend la fabrication d'une fibre à partir d'une préforme de verre chauffée et la mise en contact de la fibre avec un milieu gazeux réactif destiné à former un revêtement sur la fibre par dépôt chimique en phase vapeur, le procédé comprenant la circulation de la fibre dans ledit milieu gazeux réactif, qui circule à une vitesse constante dans le sens de déplacement de la fibre et au moins sur une partie du parcours de ladite fibre dans ledit milieu réactif, et la circulation de la fibre dans un gaz inerte circulant en sens opposé au sens de circulation de la fibre après le dépôt du revêtement ; selon l'invention, le procédé comprend, dans la partie finale du parcours de la fibre dans ledit milieu gazeux réactif, l'accélération dudit milieu gazeux réactif dans le sens de déplacement de la fibre, et l'évacuation dudit milieu gazeux réactif et du gaz inerte après la rencontre du courant du milieu gazeux réactif et du courant de gaz inerte, à distance de la fibre, pour l'entraînement des suies formées.

De préférence, l'accélération du milieu gazeux réactif donne à celui-ci, au niveau de la fibre, une vitesse au moins supérieure de 50 % à la vitesse constante de circulation dudit milieu gazeux réactif qui circule dans le même sens que la fibre.

De préférence, l'accélération du milieu gazeux réactif est effectuée à un emplacement auquel la température de surface de la fibre est comprise entre 1 000 et 1 050 °C.

Dans un exemple de réalisation, le milieu gazeux réactif contient de l'acétylène, et le gaz inerte est de l'argon.

L'invention concerne aussi un appareil de fabrication d'une fibre optique munie d'un revêtement hermétique, dans lequel une préforme de verre destinée à une fibre optique est fondue dans un four de fibrage pour la production d'une fibre optique nue qui passe longitudinalement dans un réacteur dans lequel un milieu gazeux réactif est transmis et la fibre optique nue est revêtue d'un mince revêtement de carbone formé par le milieu gazeux réactif par dépôt chimique en phase vapeur ; selon l'invention, le réacteur comporte une première partie dans laquelle est effectuée une opération de dépôt chimique en phase vapeur qui forme un revêtement hermétique, une seconde partie de section inférieure à celle de la première partie, et une troisième partie munie intérieurement d'un manchon, ledit manchon étant disposé longitudinalement, ayant une extrémité ouverte du côté de la seconde partie et délimitant un espace annulaire entre lui-même et la troisième partie, l'autre extrémité du manchon étant raccordée à un dispositif d'introduction d'un gaz inerte.

De préférence, la distance longitudinale comprise entre l'extrémité du manchon et la seconde partie du réacteur est de l'ordre de grandeur de la distance radiale séparant le manchon de la troisième partie.

Il est avantageux que la seconde partie comporte un rétrécissement progressif destiné à éviter la création de turbulences dans le courant du milieu gazeux réactif circulant dans la seconde partie.

De préférence, la première partie a une forme cylindrique, et il est aussi avantageux que le manchon et la troisième partie aient aussi une forme cylindrique.

De préférence, l'appareil comporte en outre, à chaque extrémité du réacteur, un sas d'introduction d'un gaz inerte destiné à empêcher l'entrée de l'atmosphère ambiante. Il est alors avantageux que le sas d'introduction d'un gaz inerte placé du côté de sortie de fibre du réacteur constitue aussi le dispositif d'introduction d'un gaz inerte.

D'autres caractéristiques et avantages de l'invention ressortiront mieux de la description qui va suivre d'un exemple de réalisation, faite en référence au dessin annexé sur lequel :
la figure 1 représente un exemple d'appareil de la technique antérieure, présentant le phénomène d'encrassement par les suies ; et
la figure 2 représente les zones d'encrassement du réacteur de la figure 1 ; et
la figure 3 représente une coupe schématique d'un appareil selon l'invention.

Dans le procédé classique de fabrication de fibre optique, une fibre nue provenant du fibrage d'une préforme reçoit un revêtement essentiellement formé de carbone par dépôt chimique en phase vapeur. Ce revêtement est hermétique et assure ainsi la protection de la fibre pendant de longues périodes. Pour que ce revêtement soit hermétique, il faut que soient remplies un certain nombre de conditions relatives notamment à la composition du milieu réactif gazeux utilisé pour le dépôt chimique en phase vapeur et aux températures de réaction. L'opération de décomposition qui accompagne ce dépôt chimique en phase vapeur crée des suies de carbone qui ont tendance à se déposer non seulement dans le réacteur, mais aussi sur la fibre elle-même. Ce dépôt non hermétique de suies est d'autant plus nuisible qu'il est important, et il peut même rendre la fibre inutilisable. En conséquence, il est essentiel de limiter la quantité de suies pouvant se déposer sur le revêtement hermétique formé dans l'étape initiale de dépôt chimique en phase vapeur.

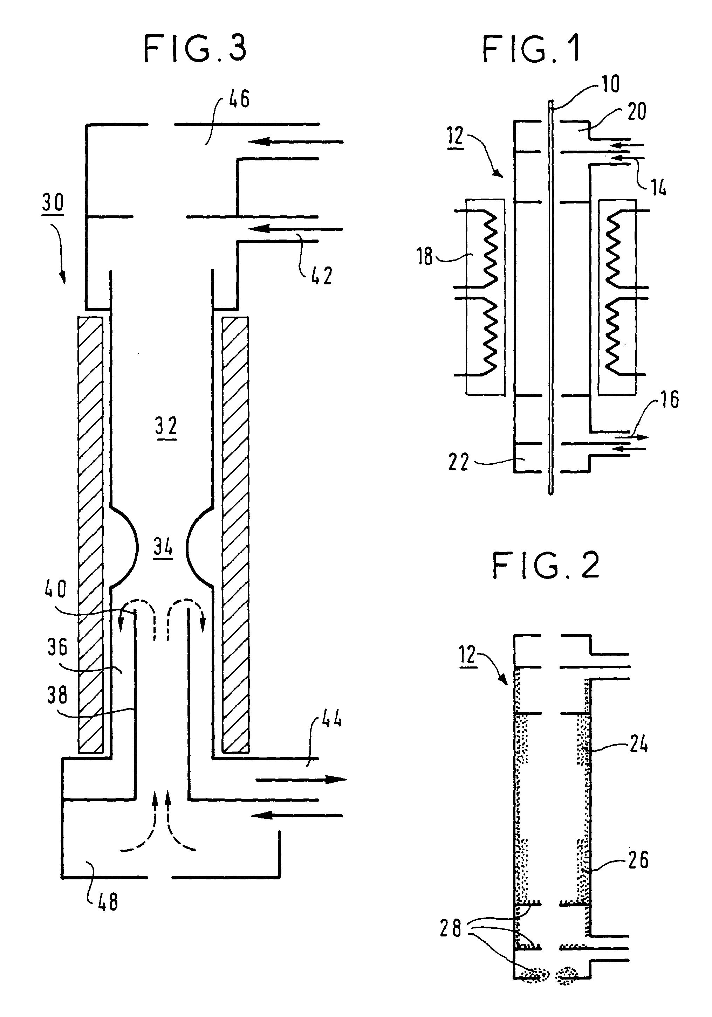

La figure 1 représente un réacteur de la technique antérieure utilisé pour la formation d'un tel revêtement hermétique. Dans ce réacteur, une fibre 10 descend verticalement dans un réacteur 12 de forme cylindrique, à une entrée 14 duquel pénètre un mélange gazeux réactif. Ce mélange gazeux réactif, qui peut être par exemple constitué d'éthylène et de trichlorométhane, peut être avantageusement constitué d'acétylène, en présence d'un véhicule gazeux inerte. Après réaction, le mélange gazeux est évacué par une sortie 16 placée au bas du réacteur 12. Compte tenu des débits utilisés, le gaz circule dans le réacteur avec un écoulement laminaire.

Le maintien du milieu gazeux à une température convenant au dépôt chimique en phase vapeur est assuré par un dispositif de chauffage 18. En outre, la pénétration de l'atmosphère extérieure dans le réacteur est empêchée par formation de deux sas 20 et 22 à l'entrée et à la sortie du réacteur respectivement.

La figure 2 représente, sous forme très schématique, des dépôts de suies de carbone observés dans un réacteur du type représenté sur la figure 1, après la fabrication d'une fibre optique. On observe un intense dépôt 24 de suies à la partie supérieure et un dépôt 26 encore plus intense à la partie inférieure du réacteur. Les suies ont aussi tendance à se déposer sur les cloisons transversales, notamment des sas, comme indiqué par la référence 28. Lorsque l'encrassement du réacteur, c'est-à-dire l'épaisseur de dépôt de suies, devient excessif, il faut interrompre le fibrage de la fibre pour nettoyer ou remplacer le réacteur.

La figure 3 est une coupe schématique d'un appareil selon l'invention. Celui-ci comporte un corps de réacteur 30 qui comprend une première partie sensiblement cylindrique 32, une seconde partie 34 formant un rétrécissement, et une troisième partie 36 qui contient un manchon longitudinal central 38 qui débouche à une extrémité interne ou ouverture 40 à proximité du rétrécissement de la seconde partie 34 du réacteur. Comme dans le réacteur de la technique antérieure, le milieu réactif gazeux est introduit par une entrée 42 placée à la partie supérieure du réacteur et est évacué avec les suies à la partie inférieure par une sortie 44. Des sas 46 et 48 protègent le milieu gazeux réactif contre l'action de l'atmosphère extérieure.

La structure du réacteur de la figure 3 présente plusieurs différences par rapport au réacteur de la technique antérieure, tel que représenté sur la figure 1. La différence la plus importante est le rétrécissement de la seconde partie 34. Il n'est pas nécessaire que cette seconde partie 34 ait une grande longueur, mais il est avantageux que le rétrécissement soit progressif afin que le milieu gazeux réactif qui descend de la première partie 32 subisse une accélération et empêche la remontée du gaz inerte introduit par le manchon 38 vers cette première partie 32. La réaction principale de dépôt chimique en phase vapeur qui forme le revêtement hermétique sur la fibre s'effectue dans la première partie 32. Une fibre qui arrive dans la seconde partie 34 a une température de l'ordre de 1 000 à 1 050 °C, c'est-à-dire une température à laquelle la génération de suies devient prépondérante vis-à-vis du dépôt hétérogène sur fibre.

A ce moment, le milieu gazeux réactif et les suies qu'il peut contenir, formées par dépôt chimique en phase vapeur, sont évacués avec le gaz inerte introduit par le manchon 38, par l'espace annulaire formé entre la paroi de la troisième partie 36 du réacteur et le manchon 38. Le fait que des particules de suies puissent se déposer dans cette troisième partie du réacteur a peu d'importance puisque la fibre est protégée par le gaz inerte de l'intérieur du manchon et n'est plus au contact des suies.

Une autre caractéristique importante de l'invention est la présence du manchon qui débouche à proximité de la seconde partie 34, c'est-à-dire que son ouverture 40 est à une distance de la seconde partie 34 qui est de l'ordre de grandeur de la distance séparant le manchon 38 de la paroi du réacteur dans la troisième partie 36. Cette disposition est destinée à créer, entre le rétrécissement et l'extrémité ouverte 40 du manchon, un régime d'écoulement tel que le gaz inerte introduit par le manchon ne remonte pas au-delà du rétrécissement de la seconde partie 34, mais assure l'entraînement des suies après avoir changé de direction par écoulement à l'extérieur du manchon. Le régime d'écoulement des gaz au niveau de la seconde partie 34 du réacteur et de l'extrémité 40 du manchon est particulièrement important à cet effet. Pour que le gaz inerte introduit par le manchon 38 ne puisse pas remonter dans la première partie 32 et, d'autre part, pour que le milieu réactif gazeux qui a réagi et qui contient des suies soit évacué par la partie annulaire formée entre le manchon et la troisième partie 36 du réacteur, il faut que les débits du milieu réactif gazeux transmis par l'entrée 42 et du gaz inerte transmis par le manchon soient équilibrés en fonction des sections du rétrécissement de la seconde partie 34, du manchon 38 et de l'espace annulaire compris entre le manchon 38 et la troisième partie 36.

Dans un exemple de réacteur dans lequel ce dernier et le manchon ont une symétrie de révolution autour d'un axe central suivi par la fibre, la première partie 32 et la troisième partie 36 ont un diamètre interne de 34 mm, et la seconde partie 34 a une plus petite section dont le diamètre est de 25 mm. Le manchon 40 a une section circulaire de 19 mm de diamètre. L'extrémité 40 est à une distance de 23 mm de la partie de plus petite section de la seconde partie 34 du réacteur.

Dans ce cas, le milieu gazeux réactif introduit par l'entrée 42 est formé d'un mélange d'acétylène et d'argon transmis avec un débit de 0,5 l/min. De l'argon gazeux est transmis par le sas 48 avec un débit de 2 l/min dans le manchon 38. Ainsi, bien que la vitesse du gaz à contre-courant de la fibre à l'intérieur du manchon 38 soit très supérieure à la vitesse du milieu gazeux réactif qui descend dans la première partie 32 dans le même sens que la fibre, le rétrécissement de la seconde partie 34 accélère le milieu réactif gazeux qui est chassé par le gaz inerte dans l'espace annulaire entourant le manchon 38, avec une vitesse de circulation dans l'espace annulaire six à sept fois plus grande que dans la première partie 32.

Avec les valeurs indiquées dans l'exemple précédent, on constate que la longueur de fibre qui peut être obtenue avant arrêt d'une opération par encrassement du réacteur est de l'ordre de 2,5 fois la longueur obtenue en l'absence du manchon 38 et du rétrécissement 34.

Bien qu'on puisse obtenir une certaine amélioration lorsque l'extrémité 40 du manchon 38 est plus éloignée de la seconde partie rétrécie 34, on a constaté qu'il était préférable que cette extrémité 40 soit proche de cette seconde partie 34, sans cependant provoquer un rétrécissement excessif entre l'extrémité 40 du manchon et le réacteur. En l'absence du rétrécissement de la seconde partie 34, le manchon 38 ne donne pas d'amélioration très significative puisqu'il a pour seul effet de réduire la longueur efficace du réacteur 30.

Bien entendu, le réacteur selon l'invention tire aussi avantage des perfectionnements connus dans la technique pour ce genre de réacteur, concernant notamment le matériau formant les parois du réacteur, l'état de surface de ce matériau, etc. En outre, il est bien entendu que les conditions de température régnant dans le réacteur correspondent aussi aux meilleures conditions connues de l'homme du métier.

Il est bien entendu que l'invention n'a été décrite et représentée qu'à titre d'exemple préférentiel et qu'on pourra apporter toute équivalence technique dans ses éléments constitutifs sans pour autant sortir de son cadre.

## Revendications

1. Procédé de fabrication d'une fibre optique revêtue, du type qui comprend la fabrication d'une fibre à partir d'une préforme de verre chauffée et la mise en contact de la fibre avec un milieu gazeux réactif destiné à former un revêtement sur la fibre par dépôt chimique en phase vapeur, le procédé comprenant la circulation de la fibre dans un milieu gazeux réactif qui circule à une vitesse constante dans le sens de déplacement de la fibre et au moins sur une partie du parcours de ladite fibre dans ledit milieu réactif, et la circulation de la fibre dans un gaz inerte circulant en sens opposé au sens de circulation de la fibre après le dépôt du revêtement,
**caractérisé en ce que** le procédé comprend, dans la partie finale du parcours de la fibre dans ledit milieu gazeux réactif, l'accélération du milieu gazeux dans le sens de déplacement de la fibre, et
l'évacuation du milieu gazeux réactif et du gaz inerte après la rencontre du courant du milieu gazeux réactif et du courant de gaz inerte, à distance de la fibre, pour l'entraînement des suies formées.

2. Procédé selon la revendication 1, **caractérisé en ce que** l'accélération dudit milieu gazeux réactif donne à celui-ci, au niveau de la fibre, une vitesse au moins supérieure de 50 % à la vitesse constante de circulation du milieu gazeux réactif qui circule dans le même sens que la fibre.

3. Procédé selon l'une des revendications 1 et 2, **caractérisé en ce que** l'accélération du milieu gazeux réactif est effectuée à un emplacement auquel la température de surface de la fibre est comprise entre 1 000 et 1 050 °C.

4. Procédé selon l'une quelconque des revendications précédentes, **caractérisé en ce que** le milieu gazeux réactif contient de l'acétylène, et le gaz inerte est de l'argon.

5. Appareil de fabrication d'une fibre optique munie d'un revêtement hermétique, dans lequel une préforme de verre destinée à une fibre optique est fondue dans un four de fibrage pour la production d'une fibre optique nue qui passe longitudinalement dans un réacteur (30) dans lequel un milieu gazeux réactif est transmis et la fibre optique nue est revêtue d'un mince revêtement de carbone formé par le milieu gazeux réactif par dépôt chimique en phase vapeur, **caractérisé en ce que** le réacteur (30) comporte
une première partie (32) dans laquelle est effectuée une opération de dépôt chimique en phase vapeur qui forme un revêtement hermétique,
une seconde partie (34) de section inférieure à celle de la première partie, et
une troisième partie (36) munie intérieurement d'un manchon (38), le manchon (38) étant disposé longitudinalement, ayant une extrémité ouverte (40) du côté de la seconde partie et délimitant un espace annulaire entre lui-même et la troisième partie (36), l'autre extrémité du manchon étant raccordée à un dispositif d'introduction d'un gaz inerte.

6. Appareil selon la revendication 5, **caractérisé en ce que** la distance longitudinale comprise entre l'extrémité (40) du manchon (38) et la seconde partie (34) est de l'ordre de grandeur de la distance radiale séparant le manchon (38) de la troisième partie (36).

7. Appareil selon l'une des revendications 5 et 6, **caractérisé en ce que** la seconde partie (34) comporte un rétrécissement progressif destiné à éviter la création de turbulences dans le courant du milieu gazeux réactif circulant dans la seconde partie (34).

8. Appareil selon l'une quelconque des revendications 5 à 7, **caractérisé en ce que** la première partie (32), le manchon (38) et la troisième partie (36) ont des formes cylindriques.

9. Appareil selon l'une quelconque des revendications 5 à 8, **caractérisé en ce que** l'appareil comporte en outre, à chaque extrémité du réacteur, un sas (46, 48) d'introduction d'un gaz inerte destiné à empêcher l'entrée de l'atmosphère ambiante.

10. Appareil selon la revendication 9, **caractérisé en ce que** le sas (48) d'introduction d'un gaz inerte placé du côté de sortie de fibre du réacteur (30) constitue le dispositif d'introduction d'un gaz inerte.

## Claims

1. A method of manufacturing a coated optical fiber, the method being of the type comprising manufacturing a fiber from a heated glass preform, and putting the fiber in contact with a reactive gaseous medium serving to form a coating on the fiber by chemical vapor deposition, the method further comprising causing the fiber to advance through a reactive gas medium which flows at a constant speed in the direction of advance of the fiber, and over at least a portion of the path of said fiber through said reactive medium, and causing the fiber to advance through an inert gas flowing in the opposite direction from the direction of advance of the fiber after the coating has been deposited;
said method being **characterized in that** the method further comprises accelerating the gaseous medium in the direction of advance of the fiber in the final portion of the path of the fiber through said reactive gaseous medium; and
removing the reactive gaseous medium and the inert gas after the gaseous medium stream meets the inert gas stream, so as to entrain the soot that has formed, removal taking place remote from the fiber.

2. A method according to claim 1, **characterized in that** accelerating said reactive gaseous medium imparts a speed to it at the fiber that is at least 50% higher than the constant speed of flow of the reactive gaseous medium flowing in the same direction as the fiber.

3. A method according to claim 1 or 2, **characterized in that** the reactive gaseous medium is accelerated at a place where the surface temperature of the fiber lies in the range 1000°C to 1050°C.

4. A method according to any preceding claim, **characterized in that** the reactive gaseous medium contains acetylene, and the inert gas is argon.

5. Apparatus for manufacturing an optical fiber provided with a hermetic coating, in which apparatus a glass optical fiber preform is melted in a fiberdrawing furnace to produce a bare optical fiber which passes longitudinally through a reactor (30) through which a reactive gaseous medium is passed, and the bare optical fiber is coated with a thin carbon coating formed by the reactive gaseous medium by chemical vapor deposition, said apparatus being **characterized in that** the reactor (30) comprises:
a first portion (32) in which a chemical vapor deposition step is performed to form a hermetic coating;
a second portion (34) of cross-sectional area smaller than that of the first portion; and
a third portion (36) provided internally with a sleeve (38), the sleeve (38) being disposed longitudinally, having an open end (40) in the vicinity of the second portion, and defining an annular space between itself and the third portion (36), the other end of the sleeve being connected to a device for feeding in an inert gas.

6. Apparatus according to claim 5, **characterized in that** the longitudinal distance between the end (40) of the sleeve (38) and the second portion (34) is of the same order of magnitude as the radial distance between the sleeve (38) and the third portion (36).

7. Apparatus according to claim 5 or 6, **characterized in that** the second portion (34) is provided with a gradually tapering neck designed to avoid turbulence being set up in the reactive gaseous medium stream flowing through the second portion (34).

8. Apparatus according to any one of claims 5 to 7, **characterized in that** the first portion (32), the sleeve (38), and the third portion (36) are cylindrical in shape.

9. Apparatus according to any one of claims 5 to 8, **characterized in that**, at each end of the reactor, the apparatus further comprises an air lock (46, 48) via which an inert gas can be fed in, and which serves to prevent the ambient atmosphere from entering the reactor.

10. Apparatus according to claim 9, **characterized in that** the inert gas feed air lock (48) that is placed at the fiber outlet of the reactor (30) constitutes the device for feeding in an inert gas.

## Patentansprüche

1. Verfahren zum Herstellen einer beschichteten optischen Faser, vom Typ, der die Herstellung einer Faser ausgehend von einer Vorform aus erhitztem Glas und das Inkontaktbringen der Faser mit einem reaktiven gasförmigen Medium umfasst, das dazu bestimmt ist, durch chemische Abscheidung in der Dampfphase eine Beschichtung auf der Faser zu bilden, wobei das Verfahren das Zirkulieren der Faser in einem reaktiven gasförmigen Medium, das mit einer konstanten Geschwindigkeit in der Bewegungsrichtung der Faser und auf wenigstens einem Teil des Weges der Faser in dem reaktiven gasförmigen Medium zirkuliert, und das Zirkulieren der Faser in einem inerten Gas, das in zur Zirkulationsrichtung der Faser entgegengesetzter Richtung zirkuliert, nach dem Abscheiden des Überzugs umfasst,
**dadurch gekennzeichnet, dass** das Verfahren im abschließenden Bereich des Weges der Faser in dem reaktiven gasförmigen Medium das Beschleunigen des gasförmigen Mediums in Bewegungsrichtung der Faser und
das Abführen des reaktiven gasförmigen Mediums und des inerten Gases nach dem Aufeinandertreffen des Stromes des reaktiven gasförmigen Mediums und des Stroms des inerten Gases in einem Abstand von der Faser zum Beseitigen des gebildeten Rußes umfasst.

2. Verfahren nach Anspruch 1, **dadurch gekennzeichnet, dass** die Beschleunigung des reaktiven gasförmigen Mediums diesem an der Faser eine Geschwindigkeit verleiht, die um wenigstens 50% größer ist als die konstante Zirkulationsgeschwindigkeit des reaktiven gasförmigen Mediums, das in gleicher Richtung wie die Faser zirkuliert.

3. Verfahren nach einem der Ansprüche 1 und 2, **dadurch gekennzeichnet, dass** das Beschleunigen des reaktiven gasförmigen Mediums an einer Stelle durchgeführt wird, an der die Oberflächentemperatur der Faser zwischen 1000 und 1050°C liegt.

4. Verfahren nach einem beliebigen der vorhergenden Ansprüche, **dadurch gekennzeichnet, dass** das reaktive gasförmige Medium Acetylen enthält, und **dass** das Inertgas Argon ist.

5. Vorrichtung zum Herstellen einer mit einer hermetischen Beschichtung versehenen optischen Faser, in der eine für eine optische Faser bestimmte Vorform in einem Ziehofen zum Erzeugen einer nackten optischen Faser geschmolzen wird, die longitudinal einen Reaktor (30) durchläuft, in dem ein reaktives gasförmiges Medium übertragen wird und die nackte optische Faser mit einer dünnen Kohlenstoffbeschichtung versehen wird, die durch das reaktive gasförmige Medium durch chemische Abscheidung in der Dampfphase erzeugt wird,
**dadurch gekennzeichnet, dass** der Reaktor (30) umfasst:
- einen ersten Bereich (32), in dem eine Operation des chemischen Abscheidens in der Dampfphase durchgeführt wird, die eine hermetische Beschichtung ergibt;
- einen zweiten Bereich (34) mit kleinerem Querschnitt als dem des ersten Bereichs, und
- einen dritten Bereich (36), der intern mit einer Muffe (38) versehen ist, wobei die Muffe (38) longitudinal angeordnet ist, auf der Seite des zweiten Bereichs ein offenes Ende (40) hat und einen Ringraum zwischen sich und dem dritten Bereich (36) begrenzt, wobei das andere Ende der Muffe an eine Vorrichtung zum Einspeisen eines inerten Gases angeschlossen ist.

6. Vorrichtung nach Anspruch 5, **dadurch gekennzeichnet, dass** der longitudinale Abstand zwischen dem Ende (40) der Muffe (38) und dem zweiten Bereich (34) in der Größenordnung des radialen Abstandes zwischen der Muffe (38) und dem dritten Bereich (36) liegt.

7. Vorrichtung nach einem der Ansprüche 5 und 6, **dadurch gekennzeichnet, dass** der zweite Bereich (34) eine progressive Verjüngung aufweist, die dazu dient, das Entstehen von Turbulenzen in dem Strom des reaktiven gasförmigen Mediums zu vermeiden, das in dem zweiten Bereich (34) zirkuliert.

8. Vorrichtung nach einem beliebigen der Ansprüche 5 bis 7, **dadurch gekennzeichnet, dass** der erste Bereich (32), die Muffe (38) und der dritte Bereich (36) zylindrische Formen haben.

9. Vorrichtung nach einem beliebigen der Ansprüche 5 bis 8, **dadurch gekennzeichnet, dass** die Vorrichtung ferner an jedem Ende des Reaktors eine Schleuse (46, 48) zum Einspeisen eines inerten Gases umfasst, das dazu dient, das Eindringen der umgebenden Atmosphäre zu verhindern.

10. Vorrichtung nach Anspruch 9, **dadurch gekennzeichnet, dass** die Schleuse (48) zum Einspeisen eines inerten Gases, die auf der Seite des Ausgangs der Faser aus dem Reaktor (30) angeordnet ist, die Vorrichtung zum Einspeisen eines inerten Gases bildet.
